**Europäisches Patentamt**

**European Patent Office**

**Office européen des brevets**

(19)

(11) Numéro de publication : **0 227 503**
**B1**

(12)

# FASCICULE DE BREVET EUROPÉEN

(45) Date de publication du fascicule du brevet :
19.07.89

(51) Int. Cl.⁴ : **F 16 H 37/04, B 60 K 17/08**

(21) Numéro de dépôt : **86402422.9**

(22) Date de dépôt : **29.10.86**

(54) **Boîte de vitesses évolutive à arbres parallèles et train planétaire, notamment pour véhicules automobiles.**

(30) Priorité : **08.11.85 FR 8516585**

(43) Date de publication de la demande :
**01.07.87 Bulletin 87/27**

(45) Mention de la délivrance du brevet :
**19.07.89 Bulletin 89/29**

(84) Etats contractants désignés :
**DE ES FR GB IT SE**

(56) Documents cités :
**EP—A— 0 069 506**
**DE—A— 1 911 756**
**DE—A— 3 507 600**
**DE—B— 1 075 395**
**DE—C—   921 729**
**GB—A—   615 089**
**US—A— 2 853 890**
**US—A— 3 548 680**
**US—A— 4 296 645**

(73) Titulaire : **VALEO**
**64 Avenue de la Grande Armée**
**F-75017 Paris (FR)**

(72) Inventeur : **Lepelletier, Pierre André Georges**
**23 avenue Adrien Moisant**
**F-78400 Chatou (FR)**

(74) Mandataire : **CABINET BONNET-THIRION**
**95 Boulevard Beaumarchais**
**F-75003 Paris (FR)**

Jouve, 18, rue St-Denis, 75001 Paris, France

EP 0 227 503 B1

**EP 0 227 503 B1**

**Description**

La présente invention se rattache au domaine des boîtes de vitesses à arbres parallèles, notamment pour véhicule automobile, comportant pour la sélection des vitesses des embrayages de préférence à passage sous charge, et par exemple des embrayages hydrauliques, pouvant remplacer en tout ou en partie les systèmes à crabots traditionnels, avec ou sans synchroniseurs.

Il est connu de réaliser de telles boîtes de vitesses à faible nombre de rapports, et par exemple à deux ou trois vitesses avant — dont généralement une prise directe — et une marche arrière, avec un arbre primaire et un arbre secondaire, un train d'engrenages et un embrayage pour chaque rapport, et un pignon ou un renvoi spécial séparé pour la marche arrière.

De telles boîtes de vitesses sont simples, robustes et de bon rendement, d'un prix et d'un encombrement acceptables, mais restent d'un niveau de performances relativement limité et conservent le plus souvent une marche arrière assez sommairement réalisée par un système à crabots.

De même, il est connu de réaliser des boîtes de vitesses à plus grand nombre de rapports, et par exemple à quatre vitesses avant et deux ou quatre marche arrière par combinaison de deux gammes de deux vitesses et d'un inverseur, ou à trois vitesses avant et trois vitesses arrière, ou encore à cinq vitesses avant et une vitesse arrière, etc...

De telles boîtes de vitesses restent robustes et de bon rendement, mais exigent de multiplier les arbres parallèles et les embrayages, et deviennent d'une complexité, d'un prix et d'un encombrement exagérément croissants avec le nombre de rapports pour atteindre un niveau de performance convenable. D'autre part, dans les boîtes à deux gammes, le changement de gamme exige une séquence de passage non plus simple, mais double — c'est-à-dire la manœuvre à la fois de quatre embrayages au lieu de deux — se traduisant par de bien plus grandes variations d'inertie et de bien plus grandes difficultés à contrôler le passage, et les raisons ou sauts de la boîte sont identiquement les mêmes dans les deux gammes, imposant des échelonnements souvent inappropriés.

Enfin, et d'une manière générale, ces boîtes de vitesses connues ne présentent pas de point mort freiné, c'est-à-dire de combinaison dans laquelle l'entrée de la boîte de vitesses est libre et la sortie est immobilisée, correspondant au cas particulier où le rapport vitesse de sortie/vitesse d'entrée est égal à zéro. Les avantages d'une telle combinaison, dont ces boîtes de vitesses se trouvent dépourvues, sont en particulier de permettre l'immobilisation du véhicule moteur tournant, notamment lors des arrêts momentanés imposés par le trafic, sans avoir à recourir constamment aux freins du véhicule, de garantir le contrôle et la continuité des passages entre les vitesses avant et les vitesses arrière lors des inversions de marche, etc..., toutes dispositions tendant à améliorer considérablement le confort de conduite.

L'objet de la présente invention est ainsi une boîte de vitesses conservant les qualités originelles de simplicité, de robustesse et de bon rendement des boîtes de vitesses à faible nombre de rapports connues ci-dessus, mais apte à offrir de plus moyennant un nombre d'organes réduit au minimum et pour un prix et un encombrement toujours aussi satisfaisants, un nombre croissant de rapports de vitesses avant et arrière toujours bien échelonnés, un point mort freiné en plus du point mort libre classique, et des séquences de passage toujours simples d'un bout à l'autre — c'est-à-dire de la plus haute vitesse arrière à la plus haute vitesse avant — se prêtant parfaitement à toute forme de contrôle.

A cet effet, l'invention propose une boîte de vitesses, notamment pour véhicule automobile, comportant, dans un carter, un arbre d'entrée ou arbre primaire et un arbre de sortie ou arbre secondaire parallèles, caractérisée en ce qu'elle comporte, d'une part, un train d'engrenages simple à deux pignons toujours en prise, ou train de sortie, dont l'un des pignons est solidaire de l'arbre de sortie, et un train d'engrenages double à quatre pignons toujours en prise, ou train d'entrée, indépendant, dont deux des pignons sont solidaires entre eux et concentriques à l'arbre secondaire, un premier embrayage et un deuxième embrayage situés sur l'arbre primaire, et un troisième embrayage situé sur l'arbre secondaire, le premier embrayage et le troisième embrayage reliant le train d'entrée respectivement à l'arbre primaire et à l'arbre secondaire et, d'autre part, un train planétaire à trois éléments concentriques à l'arbre primaire ayant un planétaire solidaire du train d'entrée, un porte-satellites relié à l'arbre primaire par le deuxième embrayage et une couronne solidaire du train de sortie, en sorte que la boîte de vitesses présente trois vitesses déterminées respectivement par chacune des combinaisons de serrage de deux des trois embrayages.

Suivant que le rapport de vitesse du train d'entrée entre le planétaire du train planétaire et le premier embrayage, est inférieur, égal ou supérieur à l'unité, la troisième vitesse est respectivement surmultipliée, en prise directe ou sous-multipliée, la prise directe étant entendue ici comme correspondant à la rotation en bloc du train planétaire.

Cette boîte de vitesses est dite la boîte de base. Suivant une autre caractéristique essentielle de l'invention, cette boîte de base est évolutive et permet de réaliser, par simple adjonction d'un minimum d'organes, toute une série de nouvelles boîtes de vitesses hautement standardisées à nombre de rapports croissant, comme on va le voir maintenant.

En ajoutant à la boîte de base un premier frein d'immobilisation du planétaire et/ou un deuxième frein d'immobilisation du porte-satellites, on dote la boîte respectivement d'une quatrième vitesse et d'un premier point mort freiné par combinaison du premier frein avec le deuxième et le troisième embrayages,

2

et/ou d'une marche arrière et d'un deuxième point mort freiné par combinaison du deuxième frein avec le premier et le troisième embrayages, et d'un troisième point mort freiné par combinaison du premier frein avec le deuxième frein.

En ajoutant à la boîte de base un train d'engrenages supplémentaire à pignons toujours en prise et un quatrième embrayage, créant une deuxième liaison entre l'arbre primaire et le planétaire du train planétaire, exclusive de la première liaison créée par le premier embrayage et le train d'entrée, on dote la boîte de deux vitesses supplémentaires, en sorte que celle-ci présente cinq vitesses par combinaison deux à deux des quatre embrayages.

Suivant que les rapports de vitesse entre le planétaire du train planétaire et l'arbre primaire résultant des deux liaisons entre ces éléments sont l'un inférieur ou égal à l'unité et l'autre égal ou supérieur à l'unité, les quatrième et/ou cinquième vitesses sont respectivement sous-multipliées et surmultipliées, ou en prise directe, la prise directe restant entendue ici comme correspondant à la rotation en bloc du train planétaire.

En ajoutant à la boîte à cinq vitesses précédente un premier et/ou un deuxième frein agissant respectivement sur le planétaire et/ou le porte-satellites du train planétaire, on dote la boîte respectivement d'une sixième vitesse et d'un premier point mort freiné par combinaison du premier frein avec le deuxième et le troisième embrayages, et/ou de deux marche arrière et d'un deuxième point mort freiné par combinaison du deuxième frein avec le premier, le quatrième et le troisième embrayages, enfin d'un troisième point mort freiné par combinaison du premier frein avec le deuxième frein.

En dédoublant d'autre part l'arbre primaire ou arbre d'entrée de chacune des boîtes précédentes en un premier arbre primaire recevant le premier embrayage et constituant une première entrée, et en un deuxième arbre primaire recevant le deuxième embrayage et constituant une deuxième entrée, on dote chacune de ces boîtes de deux entrées coaxiales distinctes.

Dans cette disposition, applicable à toutes ces boîtes, on peut dès lors relier celles-ci à deux prises de mouvement coaxiales différentes. A titre d'exemple, et à partir d'une prise de mouvement unique, on peut interposer entre la boîte et cette prise de mouvement unique un organe d'accouplement à glissement, tel qu'un coupleur ou un convertisseur de couple hydraulique, la première entrée étant liée à la partie menée de l'organe de glissement constituant la première des deux prises de mouvement coaxiales, tandis que la deuxième entrée est liée à la partie menante constituant la deuxième. On introduit ainsi, à partir de la prise de mouvement unique, une série de vitesses sujettes à glissement et une série de vitesses non sujettes à glissement.

Par exemple, lorsque la boîte de vitesses est une boîte à quatre vitesses avant et une marche arrière, la première et la troisième vitesses avant et la marche arrière sont sujettes à glissement, alors que la deuxième et la quatrième vitesses avant sont non sujettes à glissement.

Par ailleurs, si on intercale entre les deux arbres primaires une roue libre telle que le premier arbre primaire ne puisse pas tourner plus vite que le deuxième, les vitesses sujettes à glissement le deviennent uniquement en traction ou uniquement en frein moteur. Ainsi la boîte à quatre vitesses avant et une marche arrière a de plus la troisième vitesse avant non sujette à glissement en traction, et la première vitesse avant et la marche arrière non sujettes à glissement en frein moteur.

Les caractéristiques et avantages de l'invention ressortiront d'ailleurs de la description qui va suivre à titre d'exemple, en référence aux dessins annexés dans lesquels :

la figure 1 représente schématiquement la boîte de vitesses de base selon l'invention, avec un train d'entrée de rapport inférieur à l'unité ;

la figure 2 représente une variante de la boîte de la figure 1, avec un train d'entrée de rapport supérieur à l'unité ;

la figure 3 représente une nouvelle variante de la figure 1, avec un train d'entrée de rapport unité se réduisant à un train simple ;

la figure 4 représente schématiquement une boîte dérivée de celle de la figure 2, par adjonction d'un train supplémentaire ;

les figures 5 et 6 représentent des variantes de la boîte de la figure 4, dérivées de la boîte de la figure 3 ;

la figure 7 représente une variante de la figure 6, avec possibilité de sortie en ligne ;

la figure 8 représente schématiquement une boîte dérivée de celle de la figure 3, avec dédoublement de l'entrée en deux entrées coaxiales distinctes ;

la figure 9 représente une boîte selon la figure 8, entraînée par un convertisseur de couple hydraulique ;

la figure 10 représente une boîte selon la figure 9, avec une roue libre entre les deux entrées, dans une adaptation pour moteur transversal avec intégration du différentiel dans un carter commun ;

la figure 11 représente schématiquement une boîte dérivée de celle de la figure 5, avec dédoublement de l'entrée en deux entrées coaxiales distinctes ;

la figure 12 représente une boîte selon la figure 11, entraînée par un convertisseur de couple hydraulique ;

la figure 13 représente schématiquement une boîte dérivée de celle de la figure 12, avec une roue libre entre les deux entrées, dans une adaptation pour moteur transversal avec intégration du différentiel dans un carter commun.

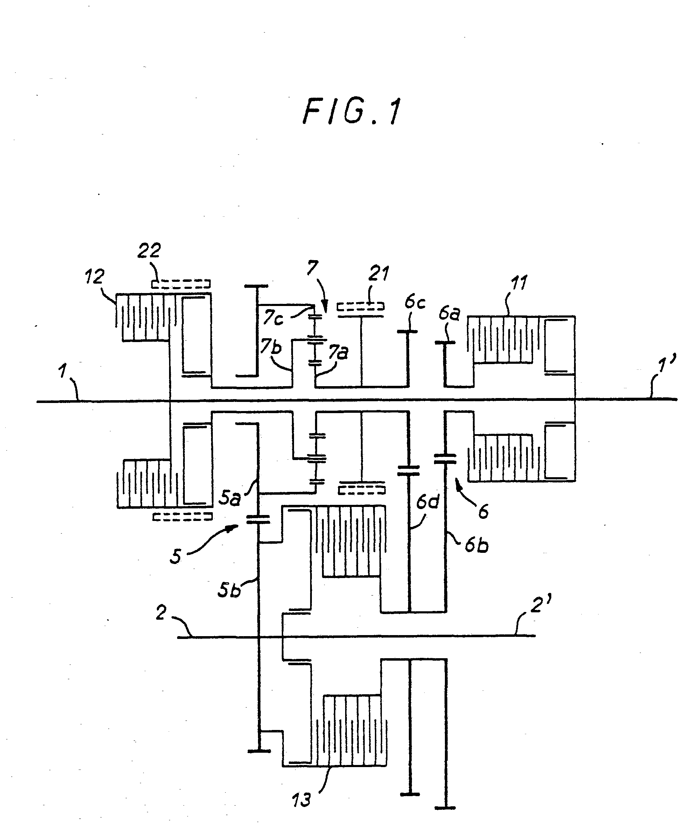

Selon la forme de réalisation choisie et représentée figure 1, une boîte de vitesses de base comporte, dans un carter non représenté, un arbre d'entrée ou arbre primaire 1,1' et un arbre de sortie ou arbre secondaire 2,2' parallèles. Sur ces arbres sont disposés d'une part un train d'engrenages simple à deux pignons toujours en prise, ou train de sortie 5, avec un pignon 5a situé sur l'arbre primaire 1,1' et un pignon 5b solidaire de l'arbre secondaire 2,2', déterminant entre eux un rapport de vitesse 5a/5b, ou rapport de sortie ; et d'autre part un train d'engrenages double à quatre pignons toujours en prise, ou train d'entrée 6, avec deux pignons solidaires 6b et 6d situés sur l'arbre secondaire 2,2' et deux pignons adjacents 6a et 6c situés sur l'arbre primaire 1,1', déterminant entre eux un rapport de vitesse 6a/6b : 6c/6d ou rapport d'entrée. En outre la boîte comporte un train planétaire 7 à trois éléments, concentrique à l'arbre primaire, et composé d'un planétaire 7a solidaire du pignon 6c du train d'entrée 6, d'un porte-satellites 7b, et d'une couronne 7c solidaire du pignon 5a du train de sortie 5.

Par ailleurs cette boîte de base comporte un premier embrayage 11, situé sur l'arbre primaire 1,1' et interposé entre celui-ci et le pignon 6a du train d'entrée 6, un deuxième embrayage 12, situé sur l'arbre primaire 1,1' et interposé entre celui-ci et le porte-satellites 7b du train planétaire 7, et un troisième embrayage 13 situé sur l'arbre secondaire 2,2' et interposé entre celui-ci et les deux pignons solidaires 6b et 6d du train d'entrée 6.

D'une manière générale, les rapports de vitesse individuels 6a/6b et 6c/6d des pignons en prise du train d'entrée 6 sont choisis l'un et l'autre inférieurs au rapport de sortie 5a/5b. De plus, dans le cas de la figure 1, le rapport d'entrée 6a/6b : 6c/6d est choisi inférieur à l'unité, en sorte que les rapports de vitesse de tous les pignons en prise se suivent dans l'ordre 5a/5b, 6c/6d, 6a/6b, apparent sur la figure.

Avec une telle construction, cette boîte de base présente trois vitesses de marche avant par combinaison deux à deux des trois embrayages, la transmission du mouvement s'effectuant de la manière suivante :

En première, le premier embrayage 11 et le troisième embrayage 13 sont serrés. La transmission s'effectue uniquement par le couple de pignons 6a, 6b selon le rapport correspondant 6a/6b, tandis que le train planétaire 7, le train de sortie 5 et le couple de pignons 6c, 6d tournent librement.

En deuxième, le deuxième embrayage 12 et le troisième embrayage 13 sont serrés. La transmission s'effectue à la fois par le train planétaire 7, le train de sortie 5 et le couple de pignons 6c, 6d, selon un rapport intermédiaire entre les rapports correspondants 5a/5b et 6c/6d, tandis que le couple de pignons 6a, 6b tourne librement.

En troisième, le premier embrayage 11 et le deuxième embrayage 12 sont serrés. La transmission s'effectue à la fois par le train planétaire 7, le train de sortie 5 et le train d'entrée 6, selon un rapport supérieur au rapport de sortie 5a/5b, compte tenu du rapport d'entrée 6a/6b : 6c/6d inférieur à l'unité.

Par convention, la troisième est alors dite surmultipliée, par référence à une prise directe entendue ici comme correspondant à la rotation en bloc du train planétaire 7.

Toujours avec la même construction, on peut ajouter à cette boîte de base un ou deux freins, avec une partie fixe solidaire du carter. Un premier frein 21 peut immobiliser le planétaire 7a du train planétaire 7 ; un deuxième frein 22 peut immobiliser le porte-satellites 7b du train planétaire 7.

Avec ces adjonctions, la boîte de base acquiert une quatrième vitesse de marche avant, une marche arrière, et trois points morts freinés par combinaison deux à deux des deux freins et des trois embrayages, exclusion faite des combinaisons du premier frein 21 avec le premier embrayage 11, et du deuxième frein 22 avec le deuxième embrayage 12, conduisant à deux conditions interdites où l'entrée de la boîte de vitesses est immobilisée et la sortie libre.

La transmission du mouvement sur les nouvelles combinaisons s'effectue de la manière suivante :

En quatrième, le premier frein 21 et le deuxième embrayage 12 sont serrés. La transmission s'effectue par le train planétaire 7 selon son rapport de surmultiplication, planétaire 7a immobilisé, suivi du train de sortie 5 selon son rapport de sortie 5a/5b.

En marche arrière, le deuxième frein 22 et le premier embrayage 11 sont serrés. La transmission s'effectue par le train d'entrée 6 selon son rapport d'entrée 6a/6b : 6c/6d, suivi du train planétaire 7 selon son rapport d'inversion, porte-satellites 7b immobilisé, suivi du train de sortie 5 selon son rapport de sortie 5a/5b.

Au point mort freiné, le premier frein 21 et le troisième embrayage 13, ou le deuxième frein 22 et le troisième embrayage 13, ou le premier frein 21 et le deuxième frein 22 sont serrés. Dans les trois cas l'arbre primaire 1,1' tourne librement, tandis que le train d'entrée 6, le train planétaire 7, le train de sortie 5 et l'arbre secondaire 2,2' sont immobilisés.

La grille logique 1 récapitule le détail des huit combinaisons ainsi obtenues :

(Voir tableau page 5.)

Grille logique 1

| EMBRAYAGES ET FREINS | M. AR 1 | POINT MORT FREINE 3 | 2 | 1 | MARCHE AVANT 1 | 2 | 3 | 4 |
|---|---|---|---|---|---|---|---|---|
| 1er embrayage 11 | — | | | | — | | — | |
| 2e embrayage 12 | | | | | | ——————— | | |
| 3e embrayage 13 | | | ———————— | | | | |
| 1er frein 21 | | — | | — | | | | — |
| 2e frein 22 | ——————— | | | | | | |

On remarquera sur cette grille d'une part les symétries et périodicités de mise en œuvre des embrayages et freins, et d'autre part que le passage de chaque combinaison à la suivante, ou de deux en deux, est obtenu de bout en bout en changeant un seul des deux organes mis en œuvre, soit exclusivement avec des séquences simples.

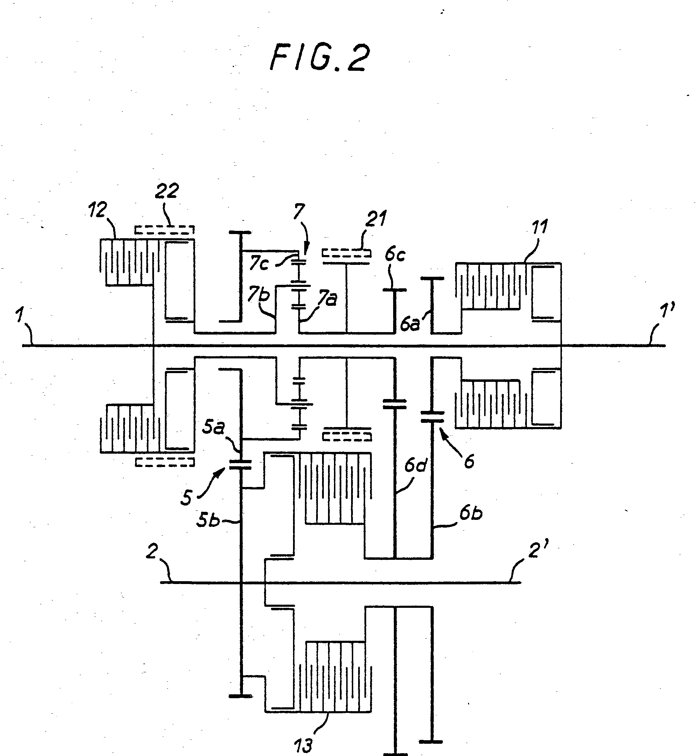

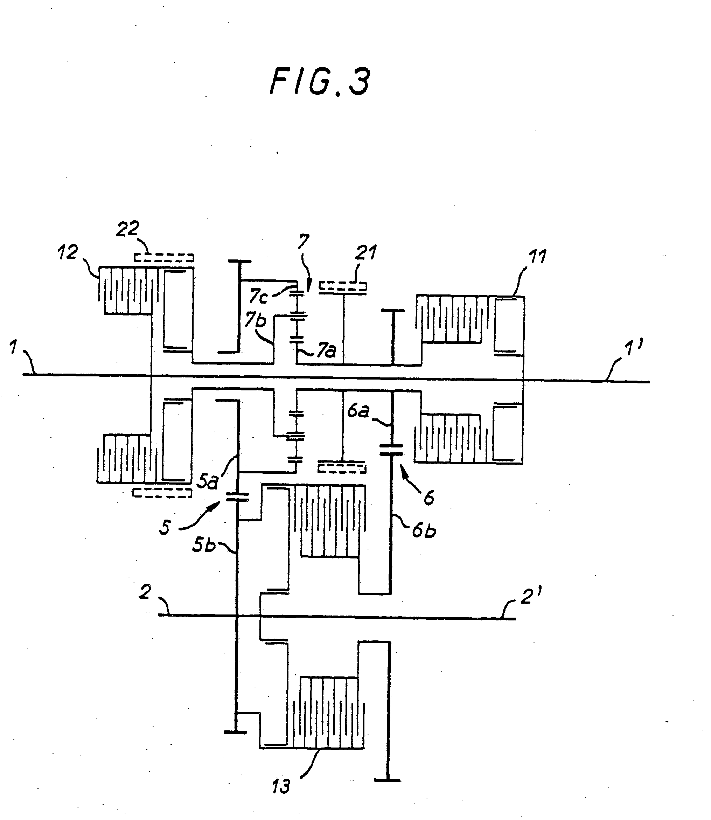

On se reportera maintenant aux figures 2 et 3 qui représentent des variantes de la figure 1. Sur cette dernière, le rapport d'entrée 6a/6b : 6c/6d est inférieur à l'unité, en sorte que la troisième est surmultipliée, par référence à une prise directe. Dans la variante représentée figure 2, ce même rapport est supérieur à l'unité, en sorte que la troisième est sous-multipliée. Enfin, dans la variante représentée figure 3, le rapport d'entrée est égal à l'unité, en sorte que la troisième est en prise directe. Dans ce cas, le train double à quatre pignons 6a, 6b, 6c, 6d est réductible à un train simple à deux pignons 6a, 6b par confusion des pignons 6a et 6c, et 6b et 6d respectivement, comme représenté sur la figure.

On appréciera qu'on bénéficie d'une très grande souplesse de choix des rapports de vitesses par les seules variations du train d'entrée 6, sans aucune modification ni du train planétaire 7, ni du détail des combinaisons récapitulées à la grille logique 1.

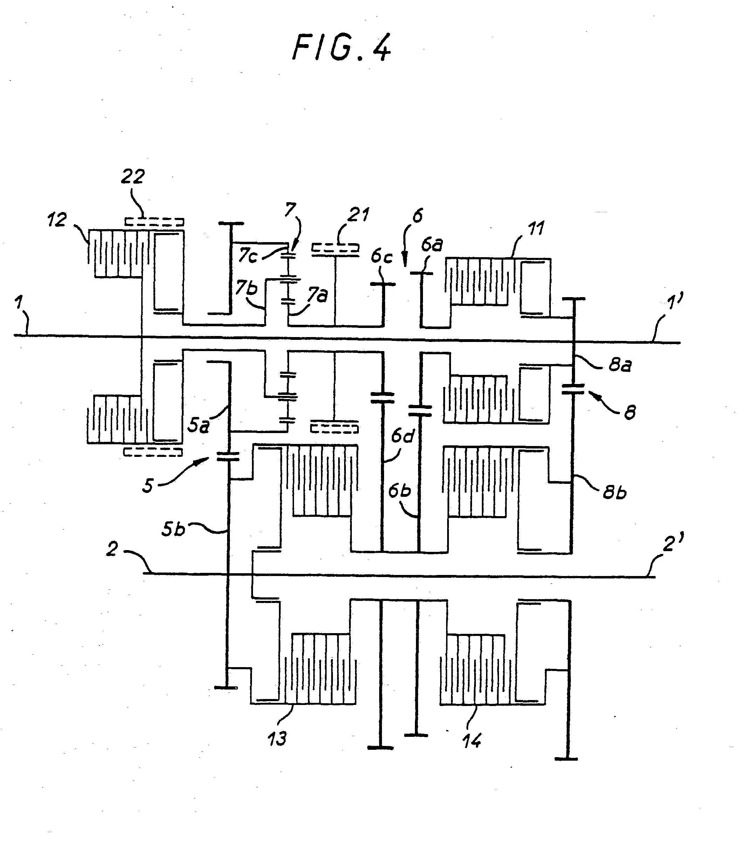

On se reportera maintenant aux figures 4, 5 et 6, qui représentent schématiquement des boîtes dérivées de la boîte de base suivant les figures 1, 2 et 3, par adjonction d'un train d'engrenages supplémentaire à pignons toujours en prise, ou train supplémentaire 8, et d'un quatrième embrayage 14, créant une deuxième liaison entre l'arbre primaire 1,1' et le planétaire 7a du train planétaire 7, selon un deuxième rapport de vitesse, ou rapport supplémentaire, différent du rapport de vitesse du train d'entrée 6.

Bien entendu, tous les éléments communs aux boîtes des figures 1 à 6 portent les mêmes références. Selon la forme de réalisation choisie et représentée, le train supplémentaire 8 est un train simple constitué d'un pignon 8a solidaire de l'arbre primaire 1,1' et d'un pignon 8b situé sur l'arbre secondaire 2,2', et le quatrième embrayage 14 est situé sur l'arbre secondaire 2,2' et interposé entre le pignon 8b et le pignon 6b du train d'entrée 6. L'ensemble détermine le rapport supplémentaire 8a/8b : 6c/6d.

D'une manière générale, le rapport de vitesse individuel 8a/8b du train supplémentaire 8 est choisi inférieur au rapport de sortie 5a/5b, comme les rapports individuels 6a/6b et 6c/6d du train d'entrée 6. Naturellement, la deuxième liaison créée par l'embrayage 14 et le train supplémentaire 8 est exclusive de la première créée par l'embrayage 11 et le train d'entrée 6, et interdit la combinaison de ces deux embrayages pour laquelle l'entrée de la boîte de vitesses serait immobilisée et la sortie libre.

Avec ces adjonctions, la boîte de base présente deux vitesses supplémentaires par combinaison du quatrième embrayage 14 avec le troisième embrayage 13 et le deuxième embrayage 12, et donne ainsi naissance à une boîte à quatre embrayages et cinq vitesses, obtenues par combinaison deux à deux des quatre embrayages, exclusion faite de la combinaison interdite.

En ajoutant de plus les freins 21 et 22, cette boîte à quatre embrayages et cinq vitesses acquiert une sixième vitesse de marche avant, deux marche arrière et trois points morts freinés par combinaison deux à deux des deux freins et des quatre embrayages, exclusion faite des combinaisons du premier frein 21 avec le premier embrayage 11 et le quatrième embrayage 14, et du deuxième frein 22 avec le deuxième embrayage 12, conduisant aux deux conditions interdites de la boîte de base, plus une condition interdite supplémentaire, où l'entrée de la boîte de vitesses est immobilisée et la sortie libre.

A titre d'exemple, dans le cas de la boîte représentée figure 4 et dérivée de celle représentée figure 2, les rapports individuels de tous les pignons en prise se suivent dans l'ordre apparent sur la figure : 5a/5b, 6a/6b, 6c/6d, 8a/8b. Le rapport d'entrée 6a/6b : 6c/6d est supérieur à l'unité comme à la figure 2, tandis que le rapport supplémentaire 8a/8b : 6c/6d est inférieur à l'unité comme le rapport d'entrée de la figure 1. La transmission s'effectue de la manière suivante :

En première, le quatrième embrayage 14 et le troisième embrayage 13 sont serrés. La transmission

s'effectue uniquement par le couple de pignons 8a, 8b selon le rapport correspondant 8a/8b, tandis que le train planétaire 7, le train de sortie 5 et le train d'entrée 6 tournent librement.

La deuxième, la troisième et la quatrième reproduisent respectivement la première, la deuxième et la troisième de la boîte de base, tandis que le train supplémentaire 8 tourne librement. Compte tenu du rapport d'entrée, 6a/6b : 6c/6d supérieur à l'unité, la quatrième est sous-multipliée.

En cinquième, le quatrième embrayage 14 et le deuxième embrayage 12 sont serrés. La transmission s'effectue à la fois par le train planétaire 7, le train de sortie 5, le couple de pignons 6c, 6d et le train supplémentaire 8, tandis que le couple de pignons 6a, 6b tourne librement. Compte tenu du rapport supplémentaire 8a/8b : 6c/6d inférieur à l'unité, cette cinquième est surmultipliée.

La sixième reproduit la quatrième ajoutée à la boîte de base par le premier frein 21.

En première marche arrière, le quatrième embrayage 14 et le deuxième frein 22 sont serrés. La transmission s'effectue par le train supplémentaire 8 suivi du couple de pignons 6c, 6d selon le rapport supplémentaire 8a/8b : 6c/6d, suivi du train planétaire 7 selon son rapport d'inversion, porte-satellites 7b immobilisé, suivi du train de sortie 5 selon son rapport de sortie 5a/5b, tandis que le couple de pignons 6a, 6b tourne librement.

La deuxième marche arrière reproduit la marche arrière ajoutée à la boîte de base par le deuxième frein 22, tandis que le train supplémentaire 8 tourne librement.

Les trois cas de point mort freiné reproduisent ceux ajoutés à la boîte de base par les deux freins 21 et 22, tandis que le train supplémentaire 8 tourne librement avec l'arbre primaire 1,1′.

La grille logique 2 récapitule le détail des onze combinaisons ainsi obtenues :

Grille logique 2

```
+------------------+----------+-------------+----------------------------+
| EMBRAYAGES       | MARCHE   | POINT MORT  |          MARCHE            |
| ET    FREINS     | ARRIERE  |   FREINE    |          AVANT             |
|                  |  2    1  | 3    2   1  | 1   2   3   4   5   6      |
+------------------+----------+-------------+----------------------------+
| 4e   embr.  14   |      | — |   |    |    | — |    |    |  | — |    |
| 1er  embr.  11   | — |      |   |    |    |   | — |  |  | — |        |
| 2e   embr.  12   |      |    |   |    |    |   |   | ————————————     |
| 3e   embr.  13   |      |    |   | —————————————    |   |    |   |    |
| 1er  frein  21   |      | — | — |    | — |   |   |  |  |    |  | — | |
| 2e   frein  22   | ————————————— |    |   |   |   |  |  |    |        |
+------------------+----------+-------------+----------------------------+
```

Comme pour la grille logique 1, on remarquera sur cette grille logique 2 d'une part les symétries et périodicités de mise en œuvre des embrayages et freins, et d'autre part que le passage de chaque combinaison à la suivante, ou de deux en deux, est obtenu de bout en bout en changeant un seul des deux organes mis en œuvre, soit exclusivement avec des séquences simples.

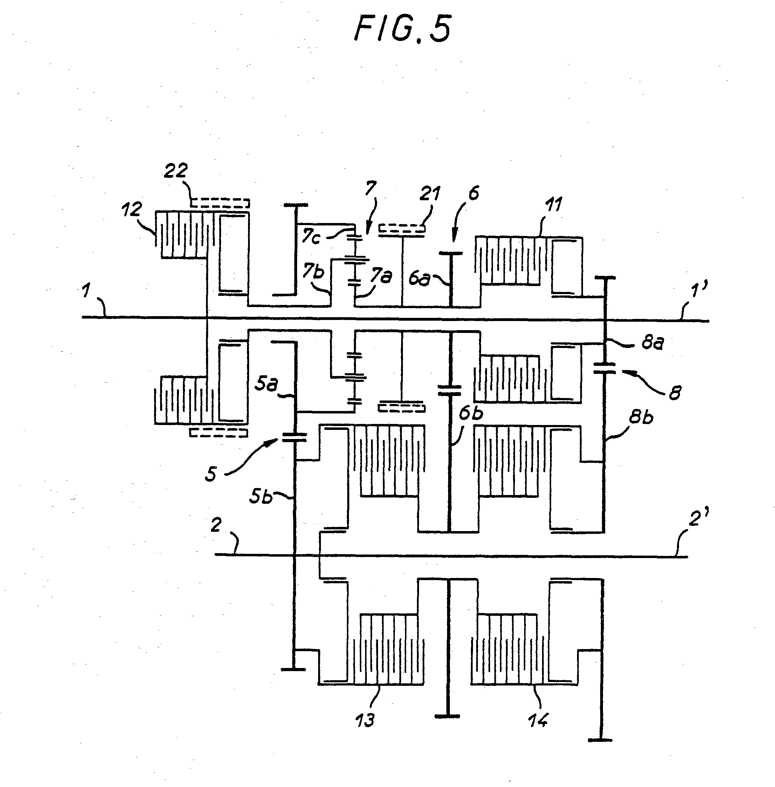

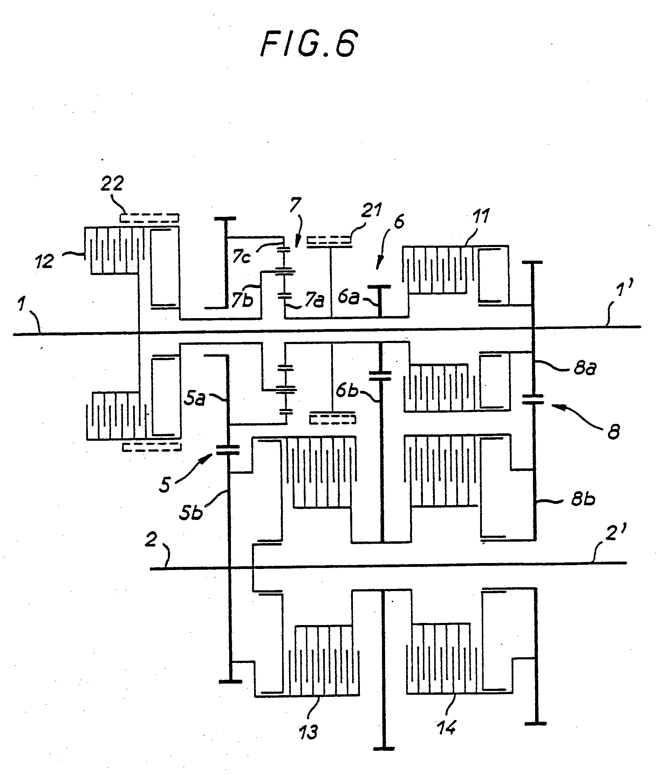

Les boîtes représentées figures 5 et 6 dérivent de la boîte de base représentée figure 3 comportant un train d'entrée 6 réduit à un train simple et une troisième en prise directe. Dans le cas de la figure 5, les rapports individuels de tous les pignons en prise se suivent dans l'ordre apparent sur la figure 5a/5b, 6a/6b, 8a/8b, et le rapport supplémentaire 8a/8b : 6a/6b est inférieur à l'unité. Les vitesses ajoutées restent les mêmes qu'à la figure 4, soit la première marche arrière, la première et la cinquième, cette dernière étant surmultipliée. La quatrième est en prise directe. La grille logique 2 s'applique telle quelle, sans modification. Dans le cas de la figure 6, les rapports se suivent dans l'ordre différent 5a/5b, 8a/8b, 6a/6b, et le rapport supplémentaire est supérieur à l'unité. Les vitesses ajoutées deviennent la deuxième marche arrière, la deuxième et la quatrième, cette dernière étant sous-multipliée. La cinquième est en prise directe. La grille logique 2 s'applique toujours sans modification, sous la seule réserve d'y intervertir les embrayages 11 et 14.

On appréciera qu'on bénéficie pour les rapports de vitesses supplémentaires de toute la liberté de choix du train supplémentaire 8.

Par ailleurs on notera que toutes les boîtes de vitesses représentées aux figures 1 à 6 ont en commun que les deux arbres d'entrée 1,1′ et de sortie 2,2′ les traversent complètement, en sorte que toutes présentent quatre possibilités d'entrée et de sortie décalées l'une par rapport à l'autre.

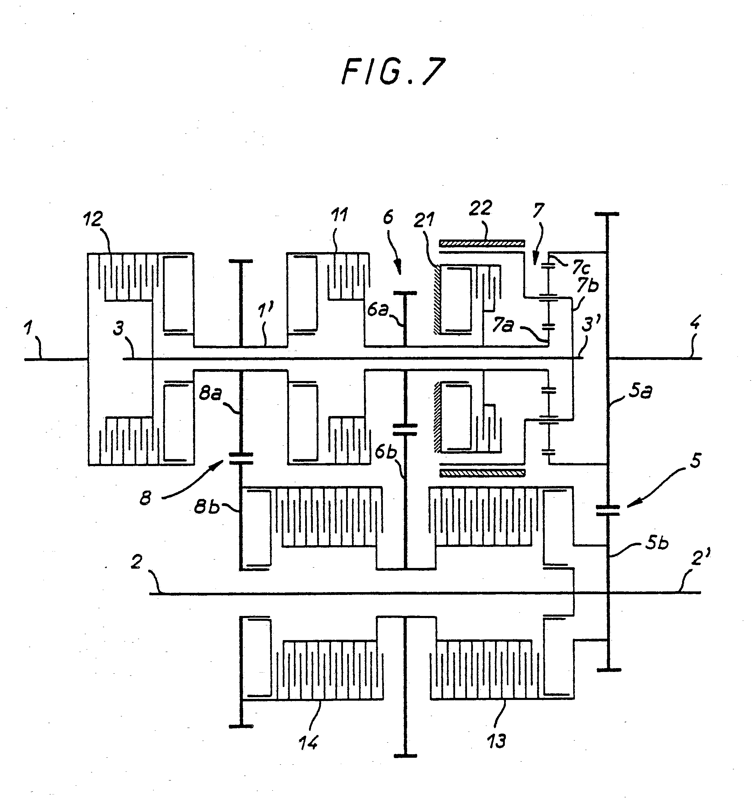

Dans la boîte représentée schématiquement figure 7, et dérivée par exemple de celle représentée figure 6, l'arbre primaire 1,1′ ne traverse pas complètement la boîte de vitesses. L'embrayage 12 est éloigné et relié au porte-satellites 7b du train planétaire 7 par un arbre auxiliaire 3,3′, tandis qu'un demi-arbre de sortie 4 solidaire du pignon 5a du train de sortie 5 est ajouté dans l'axe. Avec une telle construction, la boîte de vitesses présente à la fois une possibilité de sortie en ligne, y compris en prise directe intégrale, et deux possibilités de sortie décalées. Dans le cas de la figure, la cinquième est ainsi une prise directe intégrale pour le demi-arbre de sortie 4.

On notera que la représentation différente du frein 21 ne change strictement rien par ailleurs.

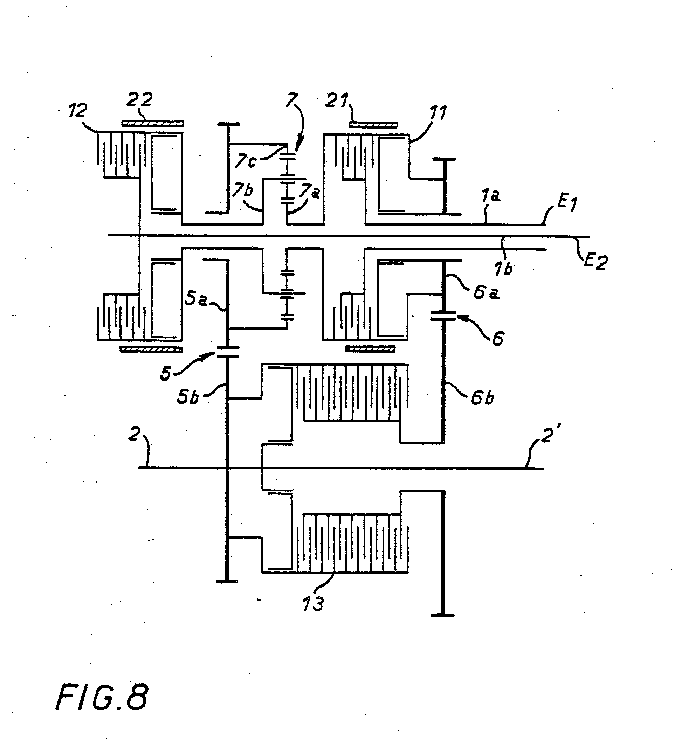

On se reportera maintenant à la figure 8, qui représente schématiquement une boîte de vitesses à deux entrées coaxiales distinctes E1, E2, dérivant des boîtes de base suivant figures 1, 2 et 3 et par exemple pour simplifier de la variante à troisième en prise directe suivant figure 3. A cet effet, l'arbre primaire ou arbre d'entrée 1,1' de la boîte de base est dédoublé en un premier arbre primaire 1a recevant le premier embrayage 11 et constituant la première entrée E1, et en un deuxième arbre primaire 1b recevant le deuxième embrayage 12 et constituant la deuxième entrée E2, les deux entrées E1 et E2 de la boîte de vitesse étant coaxiales et distinctes et pouvant être reliées respectivement à deux prises de mouvement différentes. La grille logique 1 permet alors d'identifier immédiatement les combinaisons dépendant de l'une ou de l'autre ou de ces deux prises de mouvement.

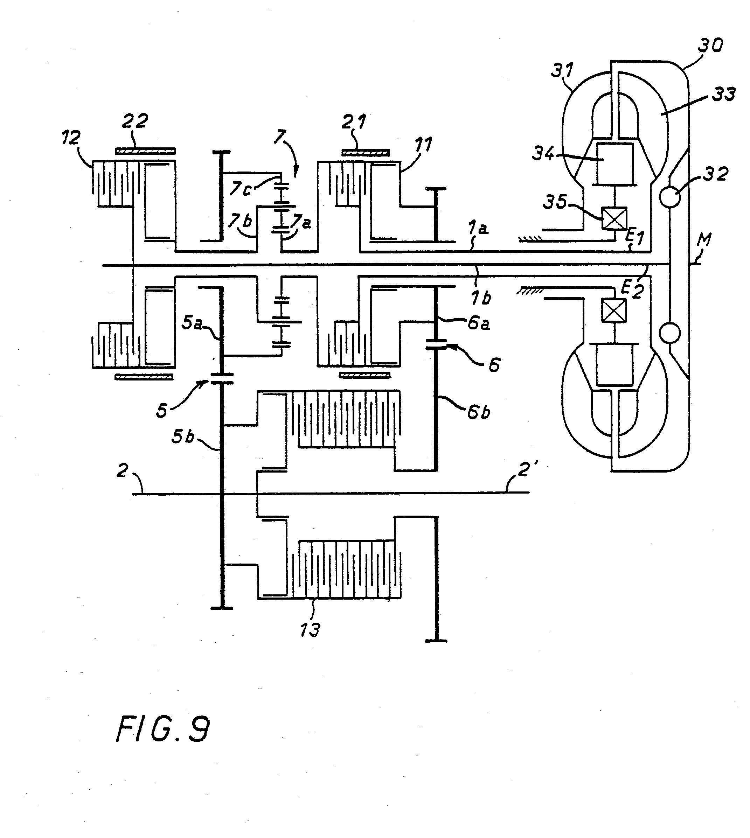

La figure 9 représente un exemple d'une telle boîte de vitesses, entraînée par un convertisseur hydraulique de couple 30 à partir d'une prise de mouvement unique M. D'une manière connue en soi, le convertisseur de couple 30 comprend un impulseur 31 et un amortisseur de vibrations de torsion 32 liés à la prise de mouvement M, une turbine 33 sujette à glissement, un réacteur 34 et une roue libre 35. La première entrée E1 de la boîte de vitesses est reliée à la turbine 33 et est dite hydraulique, et la deuxième entrée E2 est reliée à l'amortisseur de vibrations 32 et est dite mécanique.

Avec une telle disposition, la première et la marche arrière sont hydrauliques, la deuxième et la quatrième sont mécaniques, et la troisième est mixte, le convertisseur de couple 30 étant de plus parcouru en sens inverse et fortement déchargé sur cette dernière vitesse du fait du train planétaire 7.

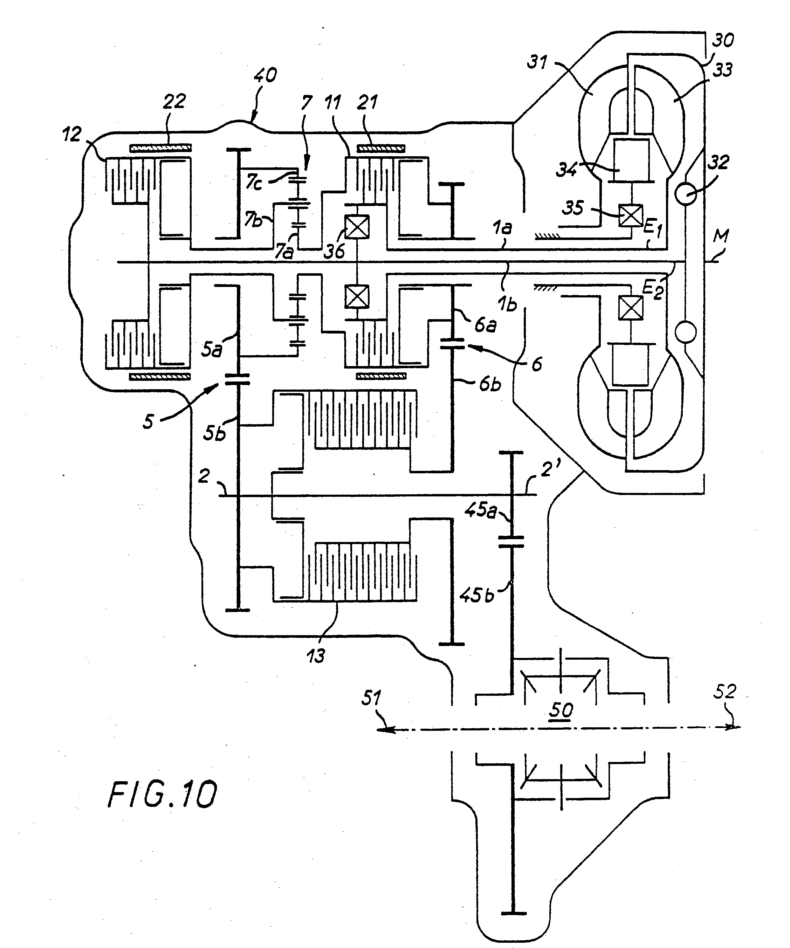

La figure 10 représente schématiquement un exemple d'adaptation de cette boîte de vitesses pour moteur transversal intégrant, dans un carter commun 40, l'ensemble suivant la figure 9, le couple de réduction final 45a, 45b, le différentiel 50 et les deux sorties 51 et 52 vers les roues motrices du véhicule. De plus, une roue libre 36 est intercalée entre les deux arbres primaires 1a et 1b de manière à interdire à l'arbre 1a de tourner plus vite que l'arbre 1b, les vitesses sujettes à glissement glissant alors uniquement en traction ou uniquement en frein moteur.

Le tableau 1, où l'astérisque * marque la venue en prise de la roue libre 36, récapitule la nature de chacune des vitesses ainsi obtenues :

Tableau 1

|  | TRACTION | FREIN MOTEUR |
|---|---|---|
| 1ère | Hydraulique | Mécanique* |
| 2e | Mécanique | Mécanique |
| 3e | Mécanique* | Mixte |
| 4e | Mécanique | Mécanique |
| Marche arrière | Hydraulique | Mécanique* |

On appréciera que le convertisseur 30 ne sert plus qu'au démarrage en première et en marche arrière, et est éliminé sur les trois autres vitesses et en frein moteur, où le glissement résiduel subsistant en troisième mixte est négligeable.

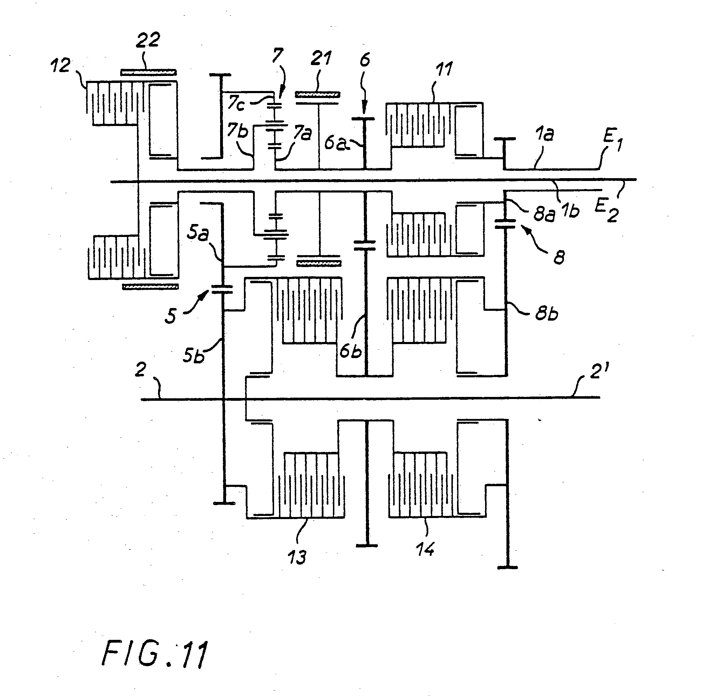

On se reportera maintenant à la figure 11, qui représente le même développement d'une boîte de vitesses à deux entrées coaxiales distinctes E1, E2 qu'à la figure 8, mais à partir des boîtes des figures 4 à 6, et par exemple pour simplifier de la variante à quatrième en prise directe suivant figure 5. On reconnaît à la figure 11 le premier arbre primaire 1a recevant le premier embrayage 11 et constituant la première entrée E1, et le deuxième arbre primaire 1b recevant le deuxième embrayage 12 et constituant la deuxième entrée E2, les deux entrées E1 et E2 de la boîte de vitesses étant coaxiales et distinctes et pouvant être reliées respectivement à deux prises de mouvement différentes. La grille logique 2 permet alors d'identifier immédiatement les combinaisons dépendant de l'une ou de l'autre ou de ces deux prises de mouvement.

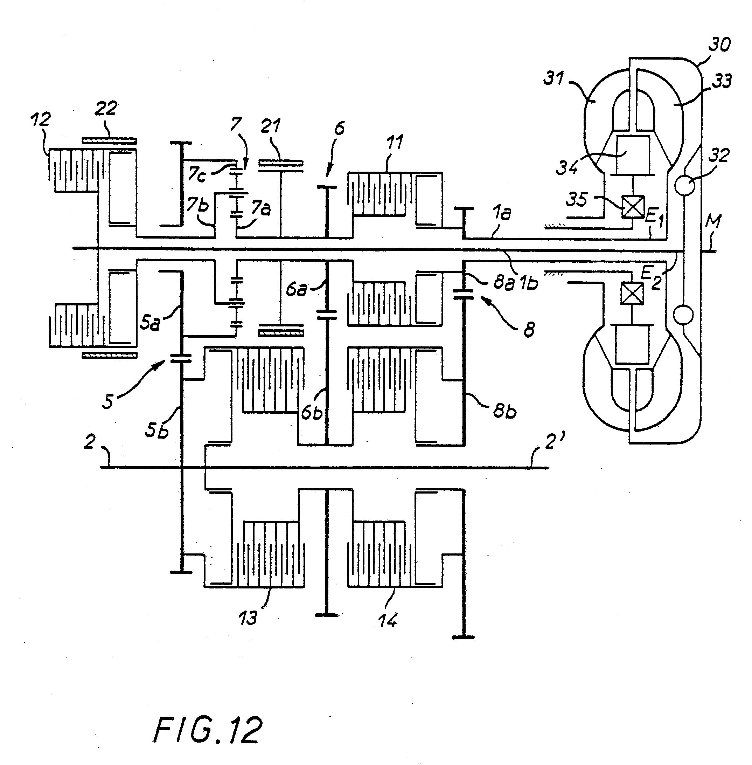

La figure 12 représente un exemple d'une telle boîte de vitesses, entraînée par un convertisseur hydraulique de couple 30 à partir d'une prise de mouvement unique M, suivant la même disposition qu'à la figure 9. Les deux marche arrière, la première et la deuxième sont hydrauliques, la troisième et la sixième sont mécaniques, et la quatrième et la cinquième sont mixtes, le convertisseur de couple étant de plus parcouru en sens inverse et fortement déchargé sur ces deux dernières vitesses du fait du train planétaire 7.

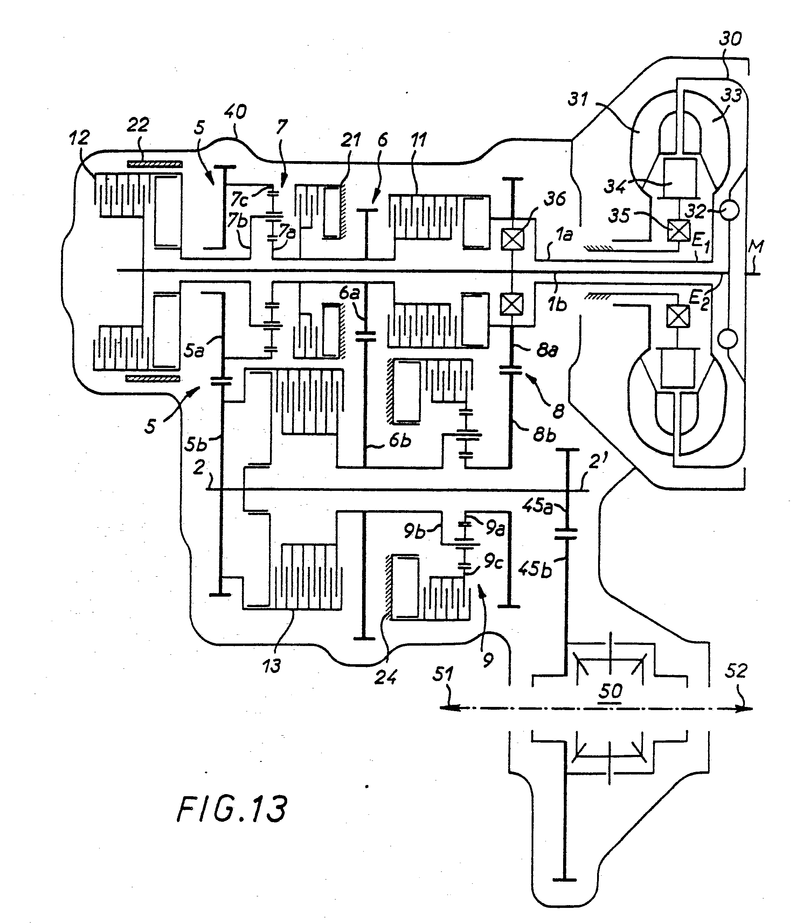

La figure 13 représente schématiquement un exemple d'adaptation de cette boîte de vitesses pour moteur transversal suivant la même disposition qu'à la figure 10. On reconnaît en particulier le convertisseur de couple 30, le carter commun 40, le couple de réduction final 45a, 45b, le différentiel 50 et les deux sorties 51 et 52 vers les roues motrices du véhicule. On reconnaît également la roue libre 36 intercalée entre les arbres primaires 1a et 1b de manière à interdire à l'arbre 1a de tourner plus vite que l'arbre 1b, les vitesses sujettes à glissement glissant alors uniquement en traction ou uniquement en frein moteur.

En variante toutefois par rapport à la figure 12, et pour faciliter l'intégration de l'ensemble dans le carter commun 40, l'embrayage 14 est remplacé d'une manière connue en soi par un train planétaire auxiliaire 9 à trois éléments et par un frein 24, ce train planétaire auxiliaire 9 ayant un planétaire 9a solidaire du pignon 8b du train supplémentaire 8, un porte-satellites 9b solidaire du pignon 6b du train d'entrée 6, et une couronne 9c contrôlée par le frein 24, les pignons 8a et 8b du train supplémentaire 8 étant ajustés en conséquence.

Une telle variante ne modifie bien entendu en rien ni les rapports de vitesse, ni la logique des combinaisons.

Le tableau 2, où l'astérique * marque la venue en prise de la roue libre 36, récapitule la nature de chacune des vitesses ainsi obtenues :

Tableau 2

|  | TRACTION | FREIN MOTEUR |
|---|---|---|
| 1ère | Hydraulique | Mécanique* |
| 2e | Hydraulique | Mécanique* |
| 3e | Mécanique | Mécanique |
| 4e | Mécanique* | Mixte |
| 5e | Mécanique* | Mixte |
| 6e | Mécanique | Mécanique |
| Marche arrière 1 | Hydraulique | Mécanique* |
| Marche arrière 2 | Hydraulique | Mécanique* |

On appréciera que le convertisseur 30 ne sert plus qu'au démarrage en première et en deuxième et sur les deux marche arrière, et est éliminé sur les quatre autres vitesses et en frein moteur, où les glissements résiduels subsistant en quatrième et en cinquième mixtes sont négligeables.

Comme à la figure 7, on notera que la représentation différente du frein 21 ne change strictement rien par ailleurs.

On donnera maintenant un certain nombre d'exemples de pignonneries et de rapports de boîte, en se limitant pour simplifier aux boîtes à 3 ou 4 vitesses avant et 1 vitesse arrière à troisième en prise directe, puis aux boîtes à 6 vitesses avant et 2 vitesses arrière, avec quatrième en prise directe ou sous-multipliée, ou cinquième en prise directe.

Exemple 1

Boîte 3 vitesses avant, 1 vitesse arrière.
Schémas des figures 3, 8, 9, 10, seul le frein 22 étant utilisé.

| Arbres parallèles | Train planétaire |
|---|---|
| Pignon 5a : 47 dents | Planétaire 7a : 39 dents |
| Pignon 5b : 47 dents | Couronne 7c : 81 dents |
| Pignon 6a : 25 dents | Satellites : 21 dents |
| Pignon 6b : 69 dents | |

(Suite)

| Vitesses | Rapports | Raisons |
|----------|----------|---------|
| 1ère | 0,362 | |
| 2e | 0,636 | 1,756 |
| 3e : prise directe | 1,000 | 1,572 |
| | | |
| Marche arrière | 0,481 | |

### Exemple 2

Boîte 3 vitesses avant, 1 vitesse arrière.
Mêmes schémas qu'à l'exemple 1, le frein 22 restant seul utilisé.

| Arbres parallèles | Train planétaire |
|-------------------|------------------|
| Pignon 5a : 47 dents | Planétaire 7a : 39 dents |
| Pignon 5b : 47 dents | Couronne 7c : 81 dents |
| Pignon 6a : 27 dents | Satellites : 21 dents |
| Pignon 6b : 67 dents | |

| Vitesses | Rapports | Raisons |
|----------|----------|---------|
| 1ère | 0,403 | |
| 2e | 0,675 | 1,675 |
| 3e : prise directe | 1,000 | 1,481 |
| | | |
| Marche arrière | 0,481 | |

### Exemple 3

Boîte 4 vitesses avant, 1 vitesse arrière.
Mêmes schémas qu'aux exemples 1 et 2, les deux freins 21 et 22 étant utilisés.

| Arbres parallèles | Train planétaire |
|-------------------|------------------|
| Pignon 5a : 47 dents | Planétaire 7a : 31 dents |
| Pignon 5b : 47 dents | Couronne 7c : 89 dents |
| Pignon 6a : 27 dents | Satellites : 29 dents |
| Pignon 6b : 67 dents | |

| Vitesses | Rapports | Raisons |
|----------|----------|---------|
| 1ère | 0,403 | |
| 2e | 0,723 | 1,795 |
| 3e : prise directe | 1,000 | 1,383 |
| 4e | 1,348 | 1,348 |
| Marche arrière | 0,348 | |

On vérifie sur ces trois premiers exemples à la fois l'extrême souplesse et le très haut degré de standardisation de la construction selon l'invention. A partir d'une structure unique, et moyennant seulement de très légères variations de pignonnerie, il est possible de reproduire facilement tous les rapports des boîtes de vitesses automatiques classiques à 3 ou 4 vitesses pour voitures de tourisme, relevant habituellement de structures différentes (trains Ravigneaux, trains Simpson, etc...).

Exemple 4

Boîte 6 vitesses avant, 2 vitesses arrière.
Schéma de la figure 4, les deux freins 21 et 22 étant utilisés.

| Arbres parallèles | Train planétaire |
|---|---|
| Pignon 5a : 47 dents | Planétaire 7a : 39 dents |
| Pignon 5b : 47 dents | Couronne 7c : 81 dents |
| Pignon 6a : 25 dents | Satellites : 21 dents |
| Pignon 6b : 54 dents | |
| Pignon 6c : 24 dents | |
| Pignon 6d : 66 dents | |
| Pignon 8a : 20 dents | |
| Pignon 8b : 73 dents | |

| Vitesses | Rapports | Raisons |
|---|---|---|
| 1ère | 0,274 | |
| 2e | 0,481 | 1,755 |
| 3e | 0,637 | 1,325 |
| 4e : sous-multipliée | 0,844 | 1,325 |
| 5e : sur-multipliée | 1,119 | 1,325 |
| 6e | 1,481 | 1,325 |
| | | |
| Marche arrière 1 | 0,363 | |
| Marche arrière 2 | 0,637 | 1,755 |

Avec un train planétaire auxiliaire 9 comme à la figure 13, choisi de plus identique au train planétaire 7 dans un but de standardisation, on obtiendrait exactement les mêmes résultats moyennant les ajustements suivants :

| Arbres parallèles | Train planétaire auxiliaire |
|---|---|
| Pignon 8a : 43 dents | Planétaire 9a : 39 dents |
| Pignon 8b : 51 dents | Couronne 9c : 81 dents |
| | Satellites : 21 dents |

Exemple 5

Boîte 6 vitesses avant, 2 vitesses arrière.
Schémas des figures 5, 11 et 12, les deux freins 21 et 22 étant utilisés.

| Arbres parallèles | | Train planétaire | |
|---|---|---|---|
| Pignon 5a : 42 dents | | Planétaire 7a : 40 dents | |
| Pignon 5b : 42 dents | | Couronne 7c : 80 dents | |
| Pignon 6a : 23 dents | | Satellites : 20 dents | |
| Pignon 6b : 56 dents | | | |
| Pignon 8a : 17 dents | | | |
| Pignon 8b : 68 dents | | | |

| Vitesses | Rapports | Raisons |
|---|---|---|
| 1ère | 0,250 | |
| 2e | 0,500 | 2,000 |
| 3e | 0,750 | 1,500 |
| 4e : prise directe | 1,000 | 1,333 |
| 5e | 1,250 | 1,250 |
| 6e | 1,500 | 1,200 |
| | | |
| Marche arrière 1 | 0,250 | |
| Marche arrière 2 | 0,500 | 2,000 |

Avec un train planétaire auxiliaire 9 comme à la figure 13, choisi de plus identique au train planétaire 7 dans un but de standardisation, on obtiendrait exactement les mêmes résultats moyennant les ajustements suivants :

| Arbres parallèles | | Train planétaire auxiliaire |
|---|---|---|
| Pignon 8a : 36 dents | | Planétaire 9a : 40 dents |
| Pignon 8b : 48 dents | | Couronne 9c : 80 dents |
| | | Satellites : 20 dents |

Exemple 6

Boîte 6 vitesses avant, 2 vitesses arrière, sortie en ligne.
Schéma de la figure 7, les deux freins 21 et 22 étant utilisés.

| Arbres parallèles | | Train planétaire | |
|---|---|---|---|
| Pignon 5a : 58 dents | | Planétaire 7a : 25 dents | |
| Pignon 5b : 33 dents | | Couronne 7c : 77 dents | |
| Pignon 6a : 28 dents | | Satellites : 26 dents | |
| Pignon 6b : 65 dents | | | |
| Pignon 8a : 40 dents | | | |
| Pignon 8b : 53 dents | | | |

(Suite)

| Vitesses | Rapports | Raisons |
|---|---|---|
| 1ère | 0,245 | |
| 2e | 0,430 | 1,755 |
| 3e | 0,570 | 1,325 |
| 4e | 0,755 | 1,325 |
| 5e : prise directe intégrale | 1,000 | 1,325 |
| 6e | 1,325 | 1,325 |
| | | |
| Marche arrière 1 | 0,325 | |
| Marche arrière 2 | 0,570 | 1,755 |

On vérifie sur ces trois nouveaux exemples le caractère remarquablement évolutif de la construction selon l'invention permettant, toujours à partir d'une structure unique et moyennant seulement de légères variations de pignonnerie, de réaliser des boîtes jusqu'à 6 vitesses en progression aussi bien arithmétique que géométrique ou mixte, qui nécessiteraient autrement des structures à arbres parallèles ou à trains planétaires beaucoup plus complexes.

En cas d'utilisation d'un train planétaire auxiliaire 9 comme à la figure 13, on vérifie de même que celui-ci peut être aisément choisi identique au train planétaire 7, accentuant encore le très haut degré de standardisation de la construction selon l'invention.

Dans tous ces exemples enfin, et par souci de simplicité, on a choisi des couples de pignons 5a, 5b égaux entre eux, correspondant à un rapport 1/1 en prise directe. On comprendra que cette condition n'est nullement obligatoire, tous les rapports individuels des couples de pignons en prise tels que 5a/5b, 6a/6b, 6c/6d, 8a/8b pouvant être décalés en bloc comme dans toute boîte de vitesses classique à arbres parallèles, sans modifier les raisons ou sauts de la boîte.

**Revendications**

1. Boîte de vitesses, notamment pour véhicule automobile, comportant, dans un carter, un arbre d'entrée ou arbre primaire (1, 1') et un arbre de sortie ou arbre secondaire (2, 2') parallèles, caractérisée en ce qu'elle comporte, d'une part, un train d'engrenages simple à deux pignons toujours en prise, ou train de sortie (5), dont l'un des pignons (5b) est solidaire de l'arbre de sortie, et un train d'engrenages double à quatre pignons toujours en prise, ou train d'entrée (6), indépendant, dont deux des pignons sont solidaires entre eux et concentriques à l'arbre secondaire, un premier embrayage (11) et un deuxième embrayage (12) situés sur l'arbre primaire (1, 1'), et un troisième embrayage (13) situé sur l'arbre secondaire (2, 2'), le premier embrayage (11) et le troisième embrayage (13) reliant le train d'entrée (6) respectivement à l'arbre primaire (1, 1') et à l'arbre secondaire (2, 2'), et, d'autre part, un train planétaire (7) à trois éléments concentriques à l'arbre primaire (1, 1') ayant un planétaire (7a) solidaire du train d'entrée (6), un porte-satellites (7b) relié à l'arbre primaire (1, 1') par le deuxième embrayage (12) et une couronne (7c) solidaire du train de sortie (5), en sorte que la boîte de vitesses présente trois vitesses déterminées respectivement par chacune des combinaisons de serrage de deux des trois embrayages (11.13, 12.13, 11.12).

2. Boîte de vitesses selon la revendication 1, caractérisée en ce qu'elle comporte en outre un premier frein (21) pour immobilisation du planétaire (7a) du train planétaire (7), en sorte que la boîte de vitesses présente une quatrième vitesse et un premier point mort freiné par combinaison du premier frein (21) avec le deuxième embrayage (12) et le troisième embrayage (13).

3. Boîte de vitesses selon la revendication 1 ou la revendication 2, caractérisée en ce qu'elle comporte en outre un deuxième frein (22) pour immobilisation du porte-satellites (7b) du train planétaire (7), en sorte que la boîte de vitesses présente une marche arrière et un deuxième point mort freiné par combinaison du deuxième frein (22) avec le premier embrayage (11) et le troisième embrayage (13).

4. Boîte de vitesses selon l'une quelconque des revendications 1 à 3, caractérisée en ce que le rapport de vitesse du train d'entrée (6) entre le planétaire (7a) du train planétaire (7) et le premier embrayage (11), est inférieur à l'unité, en sorte que la troisième vitesse est surmultipliée.

5. Boîte de vitesses selon l'une quelconque des revendications 1 à 3, caractérisée en ce que le rapport de vitesse du train d'entrée (6) entre le planétaire (7a) du train planétaire (7) et le premier embrayage (11), est supérieur à l'unité, en sorte que la troisième vitesse est sous-multipliée.

6. Boîte de vitesses selon l'une quelconque des revendications 1 à 3, caractérisée en ce que le rapport de vitesse du train d'entrée (6) entre le planétaire (7a) du train planétaire (7) et le premier embrayage (11), est égal à l'unité, en sorte que la troisième vitesse est en prise directe et le train d'entrée (6) réductible à un train simple.

7. Boîte de vitesses selon la revendication 1, caractérisée en ce qu'elle comporte en outre un train d'engrenages supplémentaire (8) à pignons toujours en prise et un quatrième embrayage (14), créant une deuxième liaison entre l'arbre primaire (1, 1') et le planétaire (7a) du train planétaire (7), exclusive de la première liaison créée par le premier embrayage (11) et le train d'entrée (6), en sorte que la boîte de vitesses présente deux vitesses supplémentaires, soit cinq vitesses, par combinaison deux à deux des quatre embrayages.

8. Boîte de vitesses selon la revendication 7, caractérisée en ce qu'elle comporte en outre un premier frein (21) pour immobilisation du planétaire (7a) du train planétaire (7), en sorte que la boîte de vitesses présente une sixième vitesse et un premier point mort freiné par combinaison du premier frein (21) avec le deuxième embrayage (12) et le troisième embrayage (13).

9. Boîte de vitesses selon la revendication 7 ou la revendication 8, caractérisée en ce qu'elle comporte en outre un deuxième frein (22) pour immobilisation du porte-satellites (7b) du train planétaire (7), en sorte que la boîte de vitesses présente deux marche arrière et un deuxième point mort freiné par combinaison du deuxième frein (22) avec le premier embrayage (11), le quatrième embrayage (14) et le troisième embrayage (13).

10. Boîte de vitesses selon l'une quelconque des revendications 7 à 9, caractérisée en ce que les deux rapports de vitesse entre le planétaire (7a) du train planétaire (7) et l'arbre primaire (1, 1') résultant des deux liaisons entre ces éléments, sont l'un inférieur à l'unité et l'autre supérieur à l'unité, en sorte que la quatrième vitesse est sous-multipliée et la cinquième vitesse est surmultipliée.

11. Boîte de vitesses selon l'une quelconque des revendications 7 à 9, caractérisée en ce que les deux rapports de vitesse entre le planétaire (7a) du train planétaire (7) et l'arbre primaire (1, 1') résultant des deux liaisons entre ces éléments, sont l'un égal à l'unité et l'autre inférieur à l'unité, en sorte que la quatrième vitesse est en prise directe et le train d'entrée (6) réductible à un train simple.

12. Boîte de vitesses selon l'une quelconque des revendications 7 à 9, caractérisée en ce que les deux rapports de vitesse entre le planétaire (7a) du train planétaire (7) et l'arbre primaire (1, 1') résultant des deux liaisons entre ces éléments, sont l'un égal à l'unité et l'autre supérieur à l'unité, en sorte que la cinquième vitesse est en prise directe et le train d'entrée (6) réductible à un train simple.

13. Boîte de vitesses selon l'une quelconque des revendications 1 à 12, caractérisée en ce que les arbres primaire (1, 1') et secondaire (2, 2') la traversent complètement, en sorte que la boîte de vitesses présente quatre possibilités d'entrée et de sortie décalées.

14. Boîte de vitesses selon l'une quelconque des revendications 1 à 12, caractérisée en ce qu'elle comporte en outre un demi-arbre de sortie (4) concentrique à l'arbre primaire (1, 1') et solidaire du pignon (5a) du train de sortie (5), et en ce que l'arbre secondaire (2, 2') la traverse complètement, en sorte que la boîte de vitesses présente une possibilité d'entrée et de sortie en ligne et deux possibilités d'entrée et de sortie décalées.

15. Boîte de vitesses selon l'une quelconque des revendications 1 à 6, caractérisée en ce que l'arbre primaire (1, 1') est dédoublé en un premier arbre primaire (1a) recevant le premier embrayage (11) et constituant une première entrée (E1) de la boîte de vitesses, et en un deuxième arbre primaire (1b) recevant le deuxième embrayage (12) et constituant une deuxième entrée (E2), en sorte que la boîte de vitesses présente deux entrées coaxiales distinctes (E1), (E2).

16. Boîte de vitesses selon la revendication 15, reliée à la prise de mouvement par l'intermédiaire d'un organe d'accouplement (30) du type à glissement, tel par exemple qu'un coupleur hydraulique ou un convertisseur hydraulique de couple, caractérisée en ce que la première entrée (E1) est reliée à la partie menée de l'organe d'accouplement sujette à glissement et la deuxième entrée (E2) à la partie menante, en sorte que la première et la troisième vitesses, et la marche arrière si celle-ci est prévue, sont sujettes à glissement, et la deuxième vitesse, et la quatrième vitesse si celle-ci est prévue, sont non sujettes à glissement.

17. Boîte de vitesses selon la revendication 16, caractérisée en ce qu'elle comporte en outre une roue libre (36) intercalée entre les deux arbres primaires (1a, 1b) et interdisant au premier arbre primaire (1a) de tourner plus vite que le deuxième (1b), en sorte que la troisième vitesse est non sujette à glissement en traction, et la première vitesse, et la marche arrière si celle-ci est prévue, sont non sujettes à glissement en frein moteur.

18. Boîte de vitesses selon l'une quelconque des revendications 7 à 12, caractérisée en ce que l'arbre primaire (1, 1') est dédoublé en un premier arbre primaire (1a) recevant le premier embrayage (11) et constituant une première entrée (E1) de la boîte de vitesses, et en un deuxième arbre primaire (1b) recevant le deuxième embrayage (12) et constituant une deuxième entrée (E2), en sorte que la boîte de vitesses présente deux entrées coaxiales distinctes (E1), (E2).

19. Boîte de vitesses selon la revendication 18, reliée à la prise de mouvement par l'intermédiaire d'un organe d'accouplement (30) du type à glissement, tel par exemple qu'un coupleur hydraulique ou un convertisseur hydraulique de couple, caractérisée en ce que la première entrée (E1) est reliée à la partie menée de l'organe d'accouplement sujette à glissement et la deuxième entrée (E2) à la partie menante, en sorte que les première, deuxième, quatrième et cinquième vitesses, et les deux marche arrière si celles-ci sont prévues, sont sujettes à glissement, et la troisième vitesse, et la sixième vitesse si celle-ci est prévue, sont non sujettes à glissement.

20. Boîte de vitesses selon la revendication 19, caractérisée en ce qu'elle comporte en outre une roue libre (36) intercalée entre les deux arbres primaires (1a, 1b) et interdisant au premier arbre primaire (1a) de tourner plus vite que le deuxième (1b), en sorte que les quatrième et cinquième vitesses sont non sujettes à glissement en traction, et les première et deuxième vitesses, et les deux marche arrière si celles-ci sont prévues, sont non sujettes à glissement en frein moteur.

## Claims

1. Gearbox, especially for an automobile vehicle, comprising, in a casing, parallel input or primary (1, 1') and output or secondary (2, 2') shafts, characterized in that it comprises, on the one hand, a single output gear train (5) consisting of two constant-mesh gearwheels, one of which gearwheels (5b) is permanently fastened to the output shaft and an independent double input gear train (6) consisting of four constant-mesh gearwheels, two of which gearwheels are permanently fastened together and are concentric with the secondary shaft, a first clutch (11) and a second clutch (12) located on the primary shaft (1, 1') and a third clutch (13) located on the secondary shaft (2, 2'), the first clutch (11) and the third clutch (13) respectively coupling the input train (6) to the primary shaft (1, 1') and to the secondary shaft (2, 2') and, on the other hand, a three-element planetary gearset (7) concentric with the primary shaft (1, 1') and comprising a sun gear (7a) fastened to the input train (6), a planet carrier (7b) coupled to the primary shaft (1, 1') by the second clutch (12) and a ring gear (7c) fastened to the output train (5) so that the gearbox features three gear ratios defined by respective combinations of pairs of said three clutches (11/13, 12/13, 11/12).

2. Gearbox according to claim 1, characterized in that it further comprises a first brake (21) for immobilizing the sun gear (7a) of the planetary gearset (7) whereby the gearbox features a fourth gear ratio and a first braked neutral setting by respective combinations of the first brake (21) with the second clutch (12) and with the third clutch (13).

3. Gearbox according to claim 1 or claim 2, characterized in that it further comprises a second brake (22) for immobilizing the planet carrier (7b) of the planetary gearset (7) whereby the gearbox features a reverse gear ratio and a second braked neutral setting by respective combinations of the second brake (22) with the first clutch (11) and with the third clutch (13).

4. Gearbox according to any one of claims 1 to 3, characterized in that the speed ratio of the input train (6) between the sun gear (7a) of the planetary gearset (7) and the first clutch (11) is less than unity, whereby the third gear ratio is an overdrive gear ratio.

5. Gearbox according to any one of claims 1 to 3, characterized in that the speed ratio of the input train (6) between the sun gear (7a) of the planetary gearset (7) and the first clutch (11) is more than unity, whereby the third gear ratio is less than one-to-one.

6. Gearbox according to any one of claims 1 to 3, characterized in that the speed ratio of the input train (6) between the sun gear (7a) of the planetary gearset (7) and the first clutch (11) is equal to unity, whereby the third gear ratio is a direct drive ratio and the input train (6) can be reduced to a single gear train.

7. Gearbox according to claim 1, characterized in that it further comprises a supplementary train (8) of constant-mesh gearwheels and a fourth clutch (14) providing a second coupling means between the primary shaft (1, 1') and the sun gear (7a) of the planetary gearset (7), exclusive of the first coupling means provided by the first clutch (11) and the input train (6), whereby the gearbox features two further gear ratios, that is to say a total of five gear ratios, by combinations in pairs of the four clutches.

8. Gearbox according to claim 7, characterized in that it further comprises a first brake (21) for immobilizing the sun gear (7a) of the planetary gearset (7), whereby the gearbox features a sixth gear ratio and a first braked neutral setting by respective combinations of the first brake (21) with the second clutch (12) and with the third clutch (13).

9. Gearbox according to claim 7 or claim 8, characterized in that it further comprises a second brake (22) for immobilizing the planet carrier (7b) of the planetary gearset (7), whereby the gearbox features two reverse gear ratios and a second braked neutral setting by respective combinations of the second brake (22) with the first clutch (11), with the fourth clutch (14) and with the third clutch (13).

10. Gearbox according to any one of claims 7 to 9, characterized in that one of the two speed ratios between the sun gear (7a) of the planetary gearset (7) and the primary shaft (1, 1'), resulting from the two connections between these elements, is less than unity and the other is more than unity, whereby the fourth gear ratio is less than one-to-one and the fifth gear ratio is an overdrive gear ratio.

11. Gearbox according to any one of claims 7 to 9, characterized in that one of the two speed ratios between the sun gear (7a) of the planetary gearset (7) and the primary shaft (1, 1'), resulting from the two connections between these elements, is equal to unity and the other is less than unity, whereby the fourth gear ratio is a direct drive ratio and the input train (6) may be reduced to a single gear train.

12. Gearbox according to any one of claims 7 to 9, characterized in that one of the two speed ratios between the sun gear (7a) of the planetary gearset (7) and the primary shaft (1, 1'), resulting from the two connections between these elements, is equal to unity and the other is more than unity, whereby the fifth gear ratio is a direct drive ratio and the input train (6) may be reduced to a single gear train.

13. Gearbox according to any one of claims 1 to 12, characterized in that the primary (1, 1') and secondary (2, 2') shafts extend completely through the gearbox, whereby the gearbox features four offset input and output options.

14. Gearbox according to any one of claims 1 to 12, characterized in that it further comprises an output half-shaft (4) concentric with the primary shaft (1, 1') and fastened to the gear wheel (5a) of the output train (5) and wherein the secondary shaft (2, 2') extends completely through the gearbox, whereby the gearbox features one in-line input and output option and two offset input and output options.

15. Gearbox according to any one of claims 1 to 6, characterized in that the primary shaft (1, 1') is split into a first primary shaft (1a), receiving the first clutch (11) and constituting a first input (E1) of the gearbox, and a second primary shaft (1b), receiving the second clutch (12) and constituting a second input (E2), whereby the gearbox features two separate coaxial inputs (E1), (E2).

16. Gearbox according to claim 15 which is connected to the drive source through a slip-type coupling unit (30) such as a fluid coupling or a hydraulic torque converter, characterized in that the first input (E1) is coupled to the driven part of the coupling unit which is subject to slip, and the second input (E2) is coupled to the driving part, whereby the first and third gear ratios and an optional reverse gear ratio are subject to slip, and the second gear ratio and an optional fourth gear ratio are not subject to slip.

17. Gearbox according to claim 16, characterized in that it further comprises a freewheel (36) interposed between the two primary shafts (1a, 1b) and adapted to prevent the first primary shaft (1a) rotating faster than the second (1b), whereby the third gear ratio is not subject to slip in traction, and the first gear ratio and an optional reverse gear ratio are not subject to slip during motor braking.

18. Gearbox according to any one of claims 7 to 12, characterized in that the primary shaft (1, 1') is split into a first primary shaft (1a), receiving the first clutch (11) and constituting a first input (E1) of the gearbox, and a second primary shaft (1b), receiving the second clutch (12) and constituting a second input (E2), whereby the gearbox features two separate coaxial inputs (E1), (E2).

19. Gearbox according to claim 18 which is connected to a drive source through a slip-type coupling unit (30) such as a fluid coupling or a hydraulic torque converter, characterized in that the first input (E1) is coupled to the driven part of the coupling unit, which is subject to slip, and the second input (E2) is coupled to the driving part, whereby the first, second, fourth and fifth gear ratios and two optional reverse gear ratios are subject to slip, and the third gear ratio and an optional sixth gear ratio are not subject to slip.

20. Gearbox according to claim 19, characterized in that it further comprises a freewheel (36) interposed between the two primary shafts (1a, 1b) and adapted to prevent the first primary shaft (1a) rotating faster than the second (1b), whereby the fourth and fifth gear ratios are not subject to slip in traction, and the first and second gear ratios and two optional reverse gear ratios are not subject to slip during motor braking.

## Patentansprüche

1. Getriebe, insbesondere für Kraftfahrzeug, welches in einem Gehäuse eine Antriebs- oder Primärwelle (1, 1') und eine Abtriebs- oder Sekundärwelle (2, 2') enthält, die parallel zueinander angeordnet sind, dadurch gekennzeichnet, daß es einerseits ein einfaches Zahnradvorgelege mit zwei stets im Eingriff befindlichen Ritzeln oder einen Abtriebsradsatz (5) besitzt, dessen eines Ritzel (5b) fest mit der Abtriebswelle verbunden ist, und ein doppeltes Zahnradvorgelege mit vier stets im Eingriff befindlichen Ritzeln oder einen Antriebsradsatz (6), welcher unabhängig ist und bei dem zwei der Ritzel fest miteinander verbunden und konzentrisch zur Sekundärwelle angeordnet sind, eine erste Kupplung (11) und eine zweite Kupplung (12), angeordnet auf der Primärwelle (1, 1'), und eine dritte Kupplung (13), angeordnet auf der Sekundärwelle (2, 2') wobei die erste Kupplung (11) und die dritte Kupplung (13) den Antriebsradsatz (6) mit der Primärwelle (1, 1') bzw. mit der Sekundärwelle (2, 2') und andererseits einen Planetengetriebezug (7) mit drei konzentrischen Elementen mit der Primärwelle (1, 1') verbinden, wobei ein Planetenrad (7a) fest mit dem Antriebsradsatz (6) und ein Satellitenträger (7b) über die zweite Kupplung (12) und einen fest mit dem Abtriebsradsatz (5) verbundenen Kranz (7c) mit der Primärwelle (1, 1') verbunden ist, so daß das Getriebe drei Gänge aufweist, die jeweils durch die einzelnen Einrückkombinationen der drei Kupplungen festgelegt sind (11-13, 12-13, 11-12).

2. Getriebe nach Anspruch 1, dadurch gekennzeichnet, daß es außerdem eine erste Bremse (21) zur Arretierung des Planetenrades (7a) des Planetengetriebezuges (7) besitzt, so daß das Getriebe einen vierten Gang und einen ersten Totpunkt aufweist, der durch Kombination der ersten Bremse (21) mit der zweiten Kupplung (12) und der dritten Kupplung (13) gebremst wird.

3. Getriebe nach Anspruch 1 oder nach Anspruch 2, dadurch gekennzeichnet, daß es außerdem eine zweite Bremse (22) zur Arretierung des Satellitenträgers (7b) des Planetengetriebezuges (7) besitzt, so daß das Getriebe einen Rückwärtsgang und einen zweiten Totpunkt aufweist, der durch Kombination der zweiten Bremse (22) mit der ersten Kupplung (11) und der dritten Kupplung (13) gebremst wird.

4. Getriebe nach einem der Ansprüche 1 bis 3, dadurch gekennzeichnet, daß das Übersetzungsverhältnis des Antriebsradsatzes (6) zwischen dem Planetenrad (7a) des Planetengetriebezuges (7) und der ersten Kupplung (11) kleiner als 1 ist, so daß der dritte Gang ins Schnelle übersetzt wird.

5. Getriebe nach einem der Ansprüche 1 bis 3, dadurch gekennzeichnet, daß das Übersetzungsverhältnis des Antriebsradsatzes (6) zwischen dem Planetenrad (7a) des Planetengetriebezuges (7) und der ersten Kupplung (11) größer als 1 ist, so daß der dritte Gang ins Langsame übersetzt wird.

6. Getriebe nach einem der Ansprüche 1 bis 3, dadurch gekennzeichnet, daß das Übersetzungsverhältnis des Antriebsradsatzes (6) zwischen dem Planetenrad (7a) des Planetengetriebezuges (7) und der ersten Kupplung (11) gleich 1 ist, so daß der dritte Gang ein direkter Gang ist und der Antriebsradsatz (6) auf einen einfachen Radsatz reduziert werden kann.

7. Getriebe nach Anspruch 1, dadurch gekennzeichnet, daß es außerdem ein zusätzliches Zahnradvorgelege (8) mit stets im Eingriff befindlichen Ritzeln und eine vierte Kupplung (14) aufweist, wodurch eine zweite Verbindung zwischen der Primärwelle (1, 1') und dem Planetenrad (7a) des Planetengetriebezuges (7) entsteht, außer der ersten Verbindung, die durch die erste Kupplung (11) und den Antriebsradsatz (6) bewirkt wird, so daß das Getriebe zwei zusätzliche Gänge, insgesamt also fünf Gänge, aufweist, indem man die vier Kupplungen jeweils paarweise kombiniert.

8. Getriebe nach Anspruch 7, dadurch gekennzeichnet, daß es außerdem eine erste Bremse (21) zur Arretierung des Planetenrades (7a) des Planetengetriebezuges (7) besitzt, so daß das Getriebe einen sechsten Gang und einen ersten Totpunkt aufweist, der durch Kombination der ersten Bremse (21) mit der zweiten Kupplung (12) und der dritten Kupplung (13) gebremst wird.

9. Getriebe nach Anspruch 7 oder Anspruch 8, dadurch gekennzeichnet, daß es außerdem eine zweite Bremse (22) zur Arretierung des Satellitenträgers (7b) des Planetengetriebezuges (7) besitzt, so daß das Getriebe zwei Rückwärtsgänge und einen zweiten Totpunkt aufweist, der durch Kombination der zweiten Bremse (22) mit der ersten Kupplung (11), der dritten Kupplung (14) und der dritten Bremse (13) gebremst wird.

10. Getriebe nach einem der Ansprüche 7 bis 9, dadurch gekennzeichnet, daß die beiden Übersetzungsverhältnisse zwischen dem Planetenrad (7a) des Planetengetriebezuges (7) und der Primärwelle (1, 1'), die aus den beiden Verbindungen zwischen diesen Elementen resultieren, einerseits kleiner als 1 und andererseits größer als 1 sind, so daß der vierte Gang ins Langsame und der fünfte ins Schnelle übersetzt wird.

11. Getriebe nach einem der Ansprüche 7 bis 9, dadurch gekennzeichnet, daß die beiden Übersetzungsverhältnisse zwischen dem Planetenrad (7a) des Planetengetriebezuges (7) und der Primärwelle (1, 1'), die aus den beiden Verbindungen zwischen diesen Elementen resultieren, einerseits gleich 1 und andererseits kleiner als 1 sind, so daß der vierte Gang ein direkter Gang ist und der Antriebsradsatz (6) auf einen einfachen Radsatz reduziert werden kann.

12. Getriebe nach einem der Ansprüche 7 bis 9, dadurch gekennzeichnet, daß die beiden Übersetzungsverhältnisse zwischen dem Planetenrad (7a) des Planetengetriebezuges (7) und der Primärwelle (1, 1'), die aus den beiden Verbindungen zwischen diesen Elementen resultieren, einerseits gleich 1 und andererseits größer als 1 sind, so daß der fünfte Gang ein direkter Gang ist und der Antriebsradsatz (6) auf einen einfachen Radsatz reduziert werden kann.

13. Getriebe nach einem der Ansprüche 1 bis 12, dadurch gekennzeichnet, daß die Primär- (1, 1') und Sekundärwelle (2, 2') vollständig durch dieses hindurch verlaufen, so daß das Getriebe vier versetzte Antriebs- und Abtriebsmöglichkeiten aufweist.

14. Getriebe nach einem der Ansprüche 1 bis 12, dadurch gekennzeichnet, daß es außerdem eine Abtriebshalbwelle (4) besitzt, die konzentrisch zur Primärwelle (1, 1') verläuft und fest mit dem Ritzel (5a) des Abtriebsradsatzes (5) verbunden ist, und daß die Sekundärwelle (2, 2') vollständig durch dieses hindurch verläuft, so daß das Getriebe eine Antriebs- und Abtriebsmöglichkeit in Reihe und zwei Antriebs- und Abtriebsmöglichkeiten mit Versatz aufweist.

15. Getriebe nach einem der Ansprüche 1 bis 6, dadurch gekennzeichnet, daß die Primärwelle (1, 1') in eine erste Primärwelle (1a) zur Aufnahme der ersten Kupplung (11) und zur Bildung eines ersten Antriebselementes (E1) des Getriebes und eine zweite Primärwelle (1b) zur Aufnahme der zweiten Kupplung (12) und zur Bildung eines zweiten Antriebselements (E2) geteilt ist, so daß das Getriebe zwei verschiedene koaxiale Antriebselemente (E1), (E2) aufweist.

16. Getriebe nach Anspruch 15, verbunden mit dem Bewegungsabgriff über ein Kopplungsorgan (30) nach Art einer Rutschkupplung, wie z. B. eine Strömungskupplung, dadurch gekennzeichnet, daß das erste Antriebselement (E1) mit dem angetriebenen Teil des Rutschkupplungsorgans und das zweite Antriebselement (E2) mit dem antreibenden Teil verbunden ist, so daß der erste und der dritte Gang sowie der Rückwärtsgang, sofern ein solcher vorgesehen ist, einer Rutschwirkung ausgesetzt sind und daß der zweite Gang und der vierte Gang, sofern ein solcher vorgesehen ist, keiner Rutschwirkung ausgesetzt sind.

17. Getriebe nach Anspruch 16, dadurch gekennzeichnet, daß es außerdem einen Freilauf (36) besitzt, der zwischen den beiden Primärwellen (1a, 1b) eingesetzt ist und verhindert, daß die erste Primärwelle (1a) schneller rotiert als die zweite (1b), so daß der dritte Gang bei Antriebsbewegung (en traction) keiner Rutschbewegung ausgesetzt ist und der vierte Gang sowie der Rückwärtsgang, sofern ein solcher vorgesehen ist, bei Benutzung der Motorbremse keiner Rutschwirkung ausgesetzt sind.

18. Getriebe nach einem der Ansprüche 7 bis 12, dadurch gekennzeichnet, daß die Primärwelle (1, 1') in eine erste Primärwelle (1a) zur Aufnahme der ersten Kupplung (11) und zur Bildung eines ersten Antriebselements (E1) des Getriebes und in eine zweite Primärwelle (1b) zur Aufnahme der zweiten Kupplung (12) und zur Bildung eines zweiten Antriebselements (E2) geteilt ist, so daß das Getriebe zwei verschiedene koaxiale Antriebselemente (E1), (E2) aufweist.

19. Getriebe nach Anspruch 18, verbunden mit dem Bewegungsabgriff über ein Kopplungsorgan (30) nach Art einer Rutschkupplung, wie z. B. eine Strömungskupplung oder einen hydraulischen Drehmomentwandler, dadurch gekennzeichnet, daß das erste Antriebselement (E1) mit dem angetriebenen Teil des Rutschkupplungsorgans, welches der Rutschwirkung ausgesetzt ist, und das zweite Antriebselement (E2) mit dem antreibenden Teil verbunden ist, so daß der erste, zweite, vierte und fünfte Gang sowie die eventuell vorhandenen beiden Rückwärtsgänge einer Rutschwirkung ausgesetzt sind und der dritte sowie der eventuell vorhandene sechste Gang keiner Rutschwirkung ausgesetzt sind.

20. Getriebe nach Anspruch 19, dadurch gekennzeichnet, daß es außerdem einen Freilauf (36) besitzt, der zwischen den beiden Primärwellen (1a, 1b) eingesetzt ist und verhindert, daß die erste Primärwelle (1a) schneller rotiert als die zweite (1b), so daß der vierte und fünfte Gang bei der Fahrbewegung keiner Rutschwirkung ausgesetzt sind und der erste und dritte Gang sowie die eventuell vorhandenen zwei Rückwärtsgänge bei Benutzung der Motorbremse keiner Rutschwirkung ausgesetzt sind.

# FIG.1

# FIG.2

# FIG.3

# FIG.4

# FIG.5

# FIG.6

# FIG.7

FIG.8

FIG.9

FIG.10

FIG.11

FIG.12

FIG.13